# EUROPÄISCHE PATENTSCHRIFT

(11) **EP 2 920 456 B1**
(45) Veröffentlichungstag und Bekanntmachung des Hinweises auf die Patenterteilung: **29.12.2021**
(21) Anmeldenummer: 13798912.5
(22) Anmeldetag: 15.11.2013
(51) Int. Cl.: F03D 1/02, F03D 13/20, F03D 80/80

(54) **WINDTURBINENANLAGE MIT TURMKONSOLE**
WIND TURBINE INSTALLATION HAVING A TOWER CONSOLE
SYSTÈME DE TURBINES ÉOLIENNES ÉQUIPÉ D'UNE CONSOLE DE TOUR

(30) Priorität: 16.11.2012 CH 24252012
(43) Veröffentlichungstag der Anmeldung: 23.09.2015
(73) Patentinhaber: Wepfer Technics AG, 8450 Andelfingen (CH)
(72) Erfinder: WEPFER, Hans, 8471 Berg-Dägerlen (CH)
(74) Vertreter: Keller Schneider Patent- und Markenanwälte AG (Bern)
(86) Internationale Anmeldenummer: PCT/CH2013/000201
(87) Internationale Veröffentlichungsnummer: WO 2014/075201

(56) Entgegenhaltungen:
- EP-A1- 0 102 657
- EP-A1- 1 788 242
- WO-A1-2010/098813
- DE-A1- 4 432 800
- JP-A- 2011 032 918
- JP-A- 2011 106 274
- US-A- 4 110 631
- US-A1- 2010 230 967
- US-A1- 2012 051 939

## Beschreibung

### Technisches Gebiet

Die vorliegende Erfindung betrifft eine Windturbinenanlage zur Stromerzeugung.

### Stand der Technik

Seit Längerem sind grosse, einrotorige Windturbinenanlagen bekannt, welche an günstigen Standorten aufgestellt die Energie des Windes in elektrische Energie umwandeln und diese in ein Stromnetz einspeisen. Diese Windturbinenanlagen sind zwischen 50 und 200 Meter hoch, und weisen wo möglich Rotordurchmesser von über 90 Metern auf. Durch die enorme Höhe ist bei diesen Windkraftanlagen auch der Schattenwurf besonders gross. Die Anlagen selbst sind in der Landschaft kaum zu übersehen und weisen aufgrund der beträchtlichen Rotordurchmesser auch einen hohen Grad an Geräuschemissionen auf. Aus diesem Grund werden besonders grosse Anlagen vorzugsweise an entlegenen Orten oder gar Offshore, das heisst im Meer, gebaut.

Obschon die gesellschaftliche Akzeptanz für erneuerbare Energien und "saubere" Energiequellen hoch ist, so wird im konkreten Fall der Windkraftanlagen vonseiten der Anwohner und des Landschaftsschutzes in der Regel gegen den Bau einer neuen Anlage opponiert. Neben den Nachteilen in Bezug zur Akzeptanz durch die Bevölkerung, können die grossen Windkraftanlagen nur an beschränkten Orten gebaut werden, da sie bedingt durch ihren grossen Rotordurchmesser ein beträchtliches Trägheitsmoment aufweisen und somit eine effiziente Windkraftnutzung an Standorten mit wechselnden Windverhältnissen und Höhen nicht effizient betrieben werden kann. Um wechselnde Windverhältnisse besser nutzen zu können, ist es bekannt, Windturbinenanlagen mit einer Windnachführung auszustatten. Diese Windnachführung kann zum Beispiel mittels einer Yaw-Steuerung erfolgen, die eine adaptive Windnachführung der Gondel ermöglicht, damit diese jederzeit optimal zum Wind steht. Eine Sensorik meldet die Windrichtung an die Steuerung, die dann bei Bedarf Stellmotoren betreibt.

Um die Windkraftanlagen gleichzeitig gesellschaftlich breiter akzeptiert zu machen, kann die Gesamthöhe der Anlage reduziert werden. Bei solchen Anlagen kommt man nicht darum herum, zur Erzielung einer nennenswerten Leistung die Anzahl der Turbinen zu erhöhen.

Die DE4432800 A1 (Hochtief AG) beschreibt eine Windkraftanlage mit einem Turmschaft, aus welchem mindestens eine Turbine ragt. Die Windturbine ist relativ zum Turmschaft um eine vertikale Achse drehbar. Die ganze Anlage wird von einem Stützkörper stabilisiert. Wird eine solche Anlage allerdings gebaut, so ist sie aufgrund der offenen Struktur anfällig für Beschädigung, Vandalenakte oder ganz allgemein ein Sicherheitsrisiko für Mensch und Tier, welche sich in der Nähe der Anlage aufhalten. Da Windkraftanlagen oft in der Nähe landwirtschaftlicher Betriebe oder in Erholungsgebieten gebaut werden, ist die Sicherheit ein nicht zu unterschätzender Faktor.

Die US2012/051939 A1 (Up to Wind Corporation) zeigt eine turmförmige Windkraftanlage. Die Anlage weist eine Vielzahl von vergleichsweise wenig durchmessenden Turbinen auf. Die Turbinen sind paarweise auf einem Träger platziert, welcher horizontal zu einem Fundament steht. Die Turbinen selbst sind in der US2012/051939 A1 als Impeller ausgestattet. Die ganze Anlage kann abgesenkt werden. Auch ist es möglich, dass eine Windnachführung durch eine asymmetrische Windlast zwischen den paarweisen Windrädern erfolgen kann. Es geht aus der US2012/051939 A1 nicht hervor, wie oder ob diese Windnachführung aktiv jenseits der asymmetrischen Windlast gesteuert werden kann. Ausserdem erstreckt sich die Windkraftanlage sehr weit in die Höhe. Analog zur oben genannten DE4432800 A1 sind auch der Sockel und der Fuss dieser Anlage anfällig für Vandalenakte, respektive ein Sicherheitsrisiko für Mensch und Tier. Bedenkt man zusätzlich die Absenkbarkeit der Windkraftanlage, so muss zu deren Platzierung ein grossflächiger Bereich eingezäunt und abgeschottet werden.

Es ist somit eine Aufgabe der vorliegenden Erfindung, eine Windturbinenanlage zur Stromerzeugung bereitzustellen, welche über eine reduzierte Anlagenhöhe verfügt und dabei keine über die Grössenrelation ausgehende Leistungseinbusse in Kauf nehmen muss. Insbesondere ist es eine Aufgabe der vorliegenden Erfindung, eine Windturbinenanlage bereitzustellen, welche mindestens ein Nachteil des Bekannten überwindet, insbesondere soll eine Windturbinenanlage bereitgestellt werden, die über eine erhöhte Sicherheit verfügt.

### Darstellung der Erfindung

Diese Aufgabe wurde durch eine Windturbinenanlage gemäss Anspruch 1 Ein Aspekt der vorliegenden Erfindung betrifft eine Windturbinenanlage zur Stromerzeugung. Die Windturbinenanlage umfasst einen Turbinenträger mit mindestens zwei Windturbinen. Die Anlage umfasst weiter eine Turmkonsole, welche mindestens eine Lagerstelle aufweist. Durch diese Lagerstelle wird eine Drehbewegung des Turbinenträgers um eine vertikale Achse des Turbinenträgers und relativ zu einem Fundament ermöglicht.

Weiter umfasst die erfindungsgemässe Windturbinenanlage mindestens eine Turmstütze, durch welche der Turbinenträger mit der Turmkonsole verbunden ist. Die Windturbinenanlage umfasst ebenso eine Elektronik, welche eine elektronische Steuerung aufweist, wobei die Elektronik dazu ausgebildet ist, elektrischen Strom netzkonform in eine Netzleitung zu überführen.

Die Elektronik ist in der Windturbinenanlage so ausgelegt, dass sie zum Fundament und einer Netzleitung um die vertikale Achse des Turbinenträgers drehbar ist. Zudem weist die Windturbinenanlage eine Türe für den Einstig in die Windturbinenanlage auf, wobei Wartungspersonal durch die Türe das Innere der Turmkonsole betreten kann und Zugriff zur Elektronik erhält.

Im Sinne der vorliegenden Erfindung kann die Windturbine als Gesamtheit umfassend eine Gondel, welche über eine Nabe verfügt, die mit einem oder mehreren, vorzugsweise zwischen zwei und acht Rotorblättern versehen ist, ausgestaltet sein. Die Gondel kann auch gleich den zur Stromerzeugung erforderlichen Generator aufweisen. Im Sinne der vorliegenden Erfindung kann eine Lagerstelle jegliches Maschinenbauelement sein, welche eine Relativbewegung zwischen zwei Teilen zu führen vermag. In einer besonderen Ausführungsform handelt es sich bei der erfindungsgemässen Lagerstelle um ein Gleitlager. In einer weiteren besonderen Ausführungsform handelt es sich bei der erfindungsgemässen Lagerstelle um ein Kugellager. Grundsätzlich ist die Wahl des Lagers für den Fachmann von untergeordneter Bedeutung, solange sie die Relativbewegung zwischen dem Turbinenträger und dem Fundament ermöglicht.

Im Sinne der vorliegenden Erfindung sei als Fundament ein Bauteil zu verstehen, welches eine direkte Verbindung der Anlage mit einem Boden ermöglicht. Erfindungsgemäss kann das Fundament eine Betonierung oder ein Profil oder ein Gerüst sein. Wesentlich ist, dass das Fundament an der vorgesehenen Stelle im Boden ortsfest und nicht verschiebbar verbaut ist.

Erfindungsgemäss kann in einem besonderen Beispiel die vertikale Achse des Turbinenträgers mit einer zentralen vertikalen Achse der gesamten Windturbinenanlage übereinstimmen. Besonders bei symmetrischen Ausführungsformen wäre dies der Fall.

In einer besonderen Ausführungsform ist der Turbinenträger im Wesentlichen horizontal zum Fundament oder Boden ausgerichtet. Im Sinne der vorliegenden Erfindung ist der Turbinenträger im Wesentlichen horizontal ausgerichtet, wenn der Turbinenträger um einen Winkel, der geringer ist als 5 Grad, von einer parallelen Ebene zum Boden oder Fundament abweicht. Grundsätzlich sei erfindungsgemäss zu verstehen, dass eine Horizontale stets in Bezug auf den Horizont als Tangente zu betrachten ist und ungeachtet von der Topografie, das heisst von einzelnen Erhebungen oder Senken, auf die die Anlage gebaut ist.

In einer besonderen Ausführungsform ist die Turmkonsole so ausgestaltet, dass sie mit dem Turbinenträger gemeinsam drehbar ist. Die Turmkonsole ist somit mit ihrer Lagerstelle relativ zum Boden oder Fundament drehbar gelagert. Die Turmkonsole und der Turbinenträger, sowie die Windturbinen selbst bilden in dieser Ausführungsform gegenüber dem Boden oder Fundament eine rotationstechnische Einheit.

In einer alternativen Ausführungsform ist die Turmkonsole so ausgelegt, dass sie bezüglich des Fundaments nicht drehbar ist. In dieser Ausführungsform ist der Turbinenträger über die Lagerstelle der Turmkonsole zu dieser drehbar gelagert. Diese drehbare Lagerung wäre wie oben geschildert analog eine Rotation um die vertikale Achse der Turbinenkonsole. Rotationstechnisch bilden in dieser Ausführungsform die Turmkonsole und das Fundament eine Einheit, gegen die der Turbinenträger mit den Windturbinen drehbar gelagert ist.

In einer besonderen Ausführungsform weist die Windturbinenanlage mindestens ein Generatorkabel je Windturbine auf. Dieses ist in dieser Ausführungsform so ausgelegt, dass es mit dem Turbinenträger gemeinsam drehbar ist. In einer weiteren besonderen Ausführungsform verläuft das Generatorkabel von den Windturbinen über den Turbinenträger durch die mindestens eine Turmstütze in ein Inneres der Turmkonsole. In einer weiteren besonderen Ausführungsform ist das Generatorkabel jederzeit von einem Bauteil der Windturbinenanlage vollständig umschlossen. Konkret hiesse dies, dass Turbinenträger, und die mindestens eine Turmstütze, durch welche die jeweiligen Generatorkabel verlaufen würden, so ausgelegt sind, dass sie einen Hohlraum umschliessen, durch welchen die entsprechenden Generatorkabel verlaufen können.

In einer besonderen Ausführungsform umfasst die Elektronik der Windturbinenanlage weiter einen Yaw-Antrieb, eine Windnachführung Yaw, eine Steuerleitung und eine Stromleitung. Der Yaw-Antrieb ist ein geeignetes Mittel, um sicherzustellen, dass die Windturbinenanlage stets die maximal mögliche Menge an elektrischer Energie produzieren kann. Durch den Yaw-Antrieb ist es möglich, stets sicherzustellen, dass die Rotoren der Windturbinen immer im optimalen Winkel zur Windrichtung stehen und diesen zu korrigieren, falls die Windrichtung wechselt. Zur Ermittlung der Windrichtung wird die Windnachführung Yaw verwendet. Aus dieser gemessenen Windrichtung wird mittels eines Algorithmus in einer besonderen Ausführungsform der Korrekturwinkel für den Yaw-Antrieb festgelegt.

In einer besonderen Ausführungsform befinden sich sowohl der Yaw-Antrieb als auch die Windnachführung Yaw im drehbar gelagerten Teil der Windturbinenanlage. Der Yaw-Antrieb kann ein Bauteil der Turmkonsole sein. Die Windnachführung Yaw ist idealerweise dort zu platzieren, wo die Windkraft wirkt, respektive wo die Windturbinen arbeiten. In einer besonderen Ausführungsform wird die Windnachführung Yaw auf dem Turbinenträger dergestalt platziert, dass sie den gleichen Windkräften ausgesetzt ist, wie die Windturbinen selbst. Damit die Windnachführung Yaw gemessene Signale an die Elektronik, insbesondere an den Yaw-Antrieb, weitergeben kann, ist sie mittels einer Steuerleitung mit der Elektronik verbunden. Weiter kann eine Stromleitung vorgesehen sein, die nutzbaren elektrischen Strom von der Elektronik zum Yaw-Antrieb führt. In einer besonders bevorzugten Ausführungsform sind diese Bauteile derart in der Turmkonsole, respektive Turmstütze, respektive Turbinenträger untergebracht, dass sie von aussen im Wesentlichen unzugänglich sind. Im Sinne der vorliegenden Erfindung kann zum Beispiel ein gesichertes Kabel, dass nur durch Umgehung einer Sicherungsmassnahme, wie eines verschliessbaren Kastens oder einer verschliessbaren Luke von aussen errreicht werden kann, als ein von aussen im Wesentlich unzugängliches Bauteil angesehen werden.

In einer besonderen Ausführungsform umfasst die Windturbinenanlage mindestens ein Mittel, um elektrische Signale zwischen den drehbar angeordneten Elementen und einer Netzleitung im Boden zu übermitteln. In einer besonderen Ausführungsform umfasst die Windturbinenanlage einen Schleifring, der zwischen der Elektronik und der Netzleitung zur Übertragung elektrischer Signale dient.

In einer alternativen oder ergänzenden Ausführungsform ist die Netzleitung im Wesentlichen flexibel ausgestaltet. Durch eine solche Ausführungsform ist es möglich, dass die Netzleitung durch ein Verdrehen der Windturbinenanlage in die eine oder andere Richtung nicht zerrissen wird. Solche flexiblen Netzleitungen sind dem Fachmann bekannt.

Eine Ableitung, die sich im Inneren einer Turmkonsole verdrehen kann, ist zum Beispiel in der US2012/051939 A1 gezeigt. Ein Schleifring hingegen ist ein bekanntes Bauteil der Elektromechanik, um einen Gleitkontakt zur Strom- und Signalübertragung zwischen einem festen und einem drehbar gelagerten Element zu gewährleisten.

In einer besonders bevorzugten Ausführungsform befindet sich der Schleifring am Fundament der Windturbinenanlage.

In einer besonderen Ausführungsform ist die erfindungsgemässe Windturbinenanlage derart ausgestaltet, dass sie gegen aussen abgeschlossen ist. Die Windturbinenanlage umfasst erfindungsgemäß eine Türe für den Einstieg in die Windturbinenanlage und kann in einer besonderen Ausführungsform eine Luke für den Einstieg in die Windturbinenanlage umfassen. Diese Türe oder Luke kann so ausgestaltet sein, dass sie sich von aussen nur mittels eines Schlüssels oder einer anderen Sicherheitsvorkehrung öffnen lässt, wie zum Beispiel einer Codeeingabe oder eines Batches. Die erfindungsgemässe Windturbinenanlage kann in einer besonderen Ausführungsform weiter ein Fenster umfassen, welches vollständig oder teilweise verglast sein kann und entweder den Einlass von Sonnenlicht in das Innere der Windturbinenanlage oder den Ausguck aus der Windturbinenanlage auf ansonsten schwer ersichtliche Bestandteile des Turbinenträgers mit den Windturbinen ermöglicht.

Ein von aussen abgeschlossenes System der Windturbinenanlage verhindert das unbefugte Betreten oder Manipulieren der Windturbinenanlage durch Dritte. Eine solche Windturbinenanlage wäre besser vor Vandalenakten geschützt. Ausserdem wäre die Gefahr minimiert, dass Dritte durch mechanische Bauteile oder Bewegungen der Windturbinenanlage zu Schaden kommen.

In einer weiteren besonderen Ausführungsform umfasst die Windturbinenanlage einen Aufstieg bis zum Turbinenträger. Durch diesen Aufstieg kann zum Beispiel im Wartungsfalle oder bei der Montage oder Demontage der Windturbinen die gesamte Anlage erreicht werden. Der Aufstieg kann über eine Leiter, Treppe oder ein Aufzugssystem erfolgen, ganz nach den besonderen Bedürfnissen des Fachmanns.

In einer weiteren besonderen Ausführungsform umfasst die erfindungsgemässe Windturbinenanlage eine Wartungsluke mit einem Deckel. Durch eine solche Wartungsluke liesse sich das Innere der Windturbinenanlage erreichen, oder umgekehrt die Windturbinenanlage an ansonsten von aussen nur schwer erreichbaren Stellen wieder verlassen. Analog zur Türe oder Luke oben, kann diese Wartungsluke mit einem Deckel ebenfalls mit einer Sperrvorrichtung vorgesehen sein oder einem Schlüsselsystem.

In einer weiteren Ausführungsform der erfindungsgemässen Windturbinenanlage umfasst diese mindestens eine Befestigung der Turmkonsole an einem Fundament. In dieser besonderen Ausführungsform ist die Befestigung in der montierten Windkraftanlage im Inneren und dadurch von aussen unzugänglich. Um die Befestigung der Turmkonsole zu erreichen, muss das Innere der Windturbinenanlage mittels einer Türe oder Luke betreten werden.

Ein nicht beanspruchter Aspekt betrifft eine Windturbinenanlage mit einer Turmkonsole, wobei der Turbinenträger mit mindestens zwei Windturbinen auf mindestens einer Turmstütze mit einer Elektronik drehbar zu einer Netzleitung und einem Fundament mit einer Lagerstelle ist. In einer besonderen Ausführungsform kann sich die Windturbine mit einem Generatorkabel und der Elektronik um eine Lagerstelle um die vertikale Achse drehen. In einer weiteren besonderen Ausführungsform ist eine Windnachführung Yaw mit einer Steuerleitung und einer Elektronik über eine Stromleitung und einem Yaw-Antrieb mit einer Lagerstelle um die vertikale Achse drehbar.

Eine weitere besondere Ausführungsform sieht vor, dass ein Innengehäuse vorgesehen ist, welches mit den Turmstützen und dem Turbinenträger drehbar mit einer Lagerstelle zur Turmkonsole ist. In einer besonderen Ausführungsform ist eine Stromverbindung zwischen Elektronik und Netzleitung ein Schleifring. In einer weiteren besonderen Ausführungsform ist die Elektronik mit einer flexiblen Netzleitung verbunden. In einer weiteren besonderen Ausführungsform ist / sind eine Türe für den Einstieg und ein Fenster vorhanden. In einer weiteren besonderen Ausführungsform ist ein Aufstieg bis zum Turbinenträger vorhanden. In einer weiteren besonderen Ausführungsform ist ein Aufstieg auf die Turmkonsole über einen Deckel möglich. In einer weiteren besonderen Ausführungsform ist die Befestigung der Turmkonsole innen.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Aus der nachfolgenden Detailbeschreibung und der Gesamtheit der Patentansprüche ergeben sich weitere vorteilhafte Ausführungsformen und Merkmalkombinationen der Erfindung.

Die Figuren zeigen:
- Figur 1: zeigt schematisch eine erfindungsgemässe Windturbinenanlage mit einer oben gelagerten Turbinenkonsole;
- Figur 2: zeigt eine erfindungsgemässe Windturbinenanlage schematisch, bei welcher die Turbinenkonsole am Fundament gelagert ist.

Grundsätzlich sind in den Figuren die gleichen Teile mit den gleichen Bezugszeichen versehen.

### Wege zur Ausführung der Erfindung

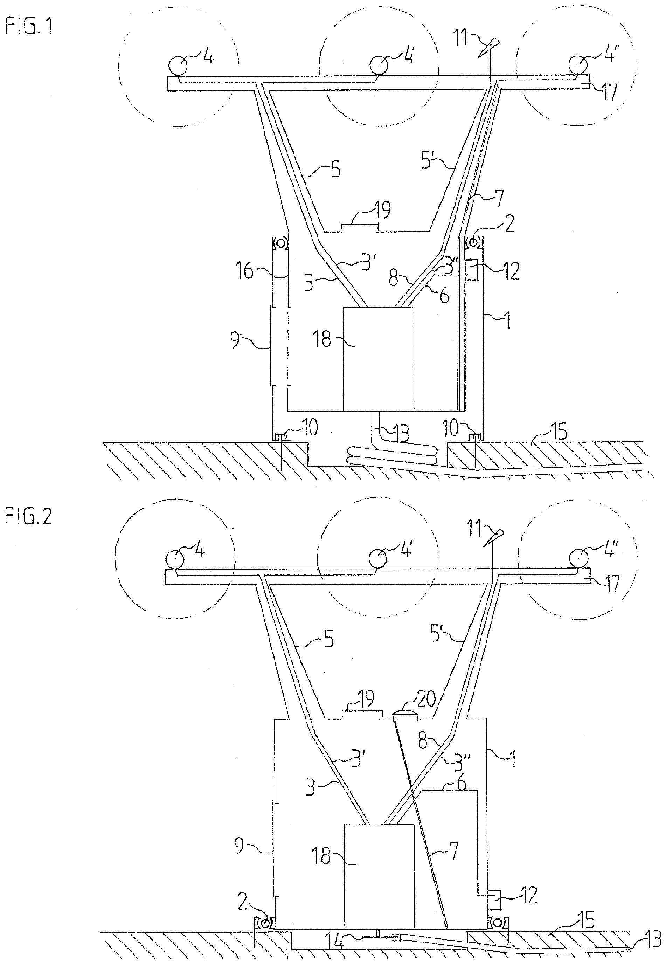

Figur 1 zeigt eine erfindungsgemässe Windturbinenanlage. Die Windturbinenanlage hat ein Fundament 15, welches aus Spritzbeton vorgefertigt wurde und auf dem mittels Befestigungselementen 10 die Turmkonsole 1 aufgesetzt ist. Die Befestigungselemente 10 können zum Beispiel Bolzen, Feststellschrauben oder auch Nieten aus Stahl sein, welche in entsprechende Bohrungen des Fundaments 15 mittels eines Flansches (nicht speziell gezeigt) die Turmkonsole mit dem Fundament fixieren.

In einer Mulde des Fundaments 15 befindet sich die Netzleitung 13, welche den von der Windturbinenanlage erzeugten Strom in ein Netz direkt einspeisen kann. Die Windturbinenanlage, welche hier beispielhaft gezeigt ist, kann, ohne dass der Strom anderweitig verarbeitet werden muss, direkt in die Stromnetze einspeisen. Dazu weist sie eine Elektronik 18 im Inneren auf, welche alle wesentlichen Bestandteile umfasst, um den elektrischen Strom netzkonform in die Netzleitung 13 zu überführen. Die Netzleitung 13 umfasst ein im Wesentlichen flexibles Material, das auch einer Verdrehung standhält ohne dass dabei keine Leistungseinbusse anfällt. Die Elektronik 18 ist weiter mit Generatorkabeln 3, 3', 3" mit den Generatoren (nicht gezeigt) der einzelnen Windturbinen 4, 4', 4" verbunden. In der vorliegenden Ausführungsform umfasst die Windturbinenanlage insgesamt drei Windturbinen 4, 4', 4", welche auf einem horizontalen Turbinenträger 17 angeordnet sind. Der Turbinenträger 17 ist auf einer horizontal zum Fundament 15 respektive dem Boden befindlichen Ebene. Ebenfalls auf dem Turbinenträger 17 ist eine Windnachführung-Yaw 11 angebracht. Diese kann zum Beispiel als Anemometer ausgestaltet sein. Dadurch lassen sich Eigenschaften des Windes, wie zum Beispiel Windrichtung und Windgeschwindigkeit, messen und über eine Steuerleitung 8 an die Elektronik 18 weiterleiten.

Die Elektronik 18 kann über einen Prozessor verfügen, welcher auf der Basis der gemessenen Windparameter, welche über die Steuerleitung 8 von der Windnachführung Yaw 11 an die Elektronik weitergeleitet werden, eine optimale Ausrichtung der Windturbinenanlage errechnet. Die Elektronik 18 steuert einen Yaw-Antrieb 12 dazu an. Der Yaw-Antrieb 12 kann mittels eines Getriebes, zum Beispiel ein Zahngetriebe, welches radial zum Umfang der Turmkonsole verläuft, die gesamte Ausrichtung des Teils der Windturbinenanlage steuern, an welchem der Turbinenträger befestigt ist. Dadurch wird auch die Elektronik 18 mitgedreht. Der Turbinenträger 17 mit den Turbinen 4, 4', 4" rotiert somit um die vertikale Achse einer Senkrechten zur horizontalen Ausdehnung des Turbinenträgers 17. Der Turbinenträger 17 ist über zwei Turmstützen 5, 5' mit dem Körper der Windturbinenanlage verbunden. Der Turbinenträger 17 und die Turmstützen 5, 5' sind im Inneren mit Leitungshohlräumen versehen, durch welche jeweils die Generatorkabel 3, 3', 3" und die Steuerleitung 8 mit der Elektronik 18 verbunden werden können.

Die Turmkonsole 1 verfügt über eine Lagerstelle zu den Elementen der Elektronik, Turmstütze 5, 5' und Turbinenträger 17. Dadurch können Letztere rotiert werden, während die Turmkonsole selbst bezüglich des Fundaments 15 ortsfest bleibt. Da die Elektronik 18 rotiert, muss die Netzleitung 13 flexibel ausgestaltet sein.

In diesem Ausführungsbeispiel ist die Windturbinenanlage mit einer Türe 9 versehen, durch welche zum Beispiel Wartungspersonal in das Innere der Windturbinenanlage eintreten kann und Zugang zur Elektronik 18 erhält. Ein Fenster 19 auf der Oberseite des Turbinenanlagenkörpers ermöglicht die Ansicht der Windturbinen 4, 4', 4".

Figur 2 zeigt eine alternative Ausführungsform der erfindungsgemässen Windturbinenanlage. Diese Windturbinenanlage umfasst ebenfalls insgesamt drei Windturbinen 4, 4', 4", welche auf einem horizontalen Turbinenträger 17 angeordnet sind.

Die Windturbinen 4, 4' und 4" sind mit Generatoren ausgestattet, welche aus der Windenergie elektrischen Strom erzeugen (nicht gezeigt). Um den elektrischen Strom von den Windturbinen 4, 4', 4" abzuleiten, sind Generatorkabel 3, 3', 3" vorgesehen, wobei je ein Generatorkabel 3, 3', 3" für je eine Windturbine 4, 4', 4" vorgesehen ist. Diese Generatorkabel 3, 3', 3" leiten den Strom zu einer zentralen Elektronik 18. In dieser Ausführungsform ist ebenfalls ein Yaw-Antrieb 12 vorgesehen, welcher von der Elektronik 18 mittels einer Stromleitung 6 mit elektrischem Strom versorgt wird. Im Gegensatz zur

Figur 1 ist in dieser Ausführungsform der Yaw-Antrieb in der Nähe des Fundaments. Die hier gezeigte Windturbinenanlage umfasst weiter eine Turmkonsole 1, welche am Fundament 15 Lagerstellen 2 aufweist. Diese Lagerstellen ermöglichen eine Drehung der Turmkonsole 1 und damit verbunden der gesamten Anordnung an Windturbinen 4, 4', 4" um die vertikale Achse der Turmkonsole 1 bezüglich des Fundaments 15. Um dennoch eine Ableitung der gewonnenen elektrischen Energie zu ermöglichen, ist ein Schleifring 14 vorgesehen, der sich in der vorliegenden Ausführungsform in einer Mulde des Fundaments 15 befindet und dort eine Schleifverbindung zur Netzleitung 13 aufrechterhält. Auch diese Ausführungsform sieht eine Türe 9 vor, durch die das Innere der Turmkonsole 1 betreten werden kann und einem Wartungsfachmann Zugriff auf die Elektronik 18 bietet. Die gezeigte Windturbinenanlage umfasst zudem einen Aufstieg 7, durch welchen eine Wartungsluke 20 mit Deckel auf dem Dach der Turmkonsole 1 erreicht werden kann. Dadurch kann ein Wartungsfachmann auch den Turbinenträger 17 und die Windturbinen 4, 4', 4" erreichen. Um diesen noch besser zu erreichen, können Trittstufen entlang der Turmstützen 5, 5' vorgesehen sein.

Mit der gezeigten Windturbinenanlage ist es möglich, insgesamt kompaktere, sicherere und nicht minder leistungsfähige Windturbinenanlagen bereitzustellen.

## Patentansprüche

1. Windturbinenanlage zur Stromerzeugung, umfassend:
a) einen Turbinenträger (17) mit mindestens zwei Windturbinen (4, 4', 4");
b) eine Turmkonsole (1) mit mindestens einer Lagerstelle (2), durch welche eine
Drehbewegung des Turbinenträgers (17) um eine vertikale Achse des
Turbinenträgers (17) und relativ zu einem Fundament (15) ermöglicht ist;
c) mindestens eine Turmstütze (5, 5'), durch welche der Turbinenträger (17) mit der Turmkonsole (1) verbunden ist;
d) eine Elektronik (18) umfassend eine elektronische Steuerung, wobei die Elektronik (18) dazu ausgebildet ist, elektrischen Strom netzkonform in eine Netzleitung (13) zu überführen, wobei die Elektronik (18) in der Turmkonsole (1) der Windturbinenanlage so ausgelegt ist, dass sie zum Fundament (15) und einer Netzleitung (13) um die vertikale Achse des Turbinenträgers (17) drehbar ist, und wobei
die Windturbinenanlage eine Türe (9) für den Einstieg in die Windturbinenanlage aufweist, wobei Wartungspersonal durch die Türe (9) das Innere der Turmkonsole (1) betreten kann und Zugriff zur Elektronik (18) erhält.

2. Windturbinenanlage gemäß Anspruch 1, wobei der Turbinenträger (17) im Wesentlichen horizontal zum Fundament (15) oder Boden ausgerichtet ist.

3. Windturbinenanlage gemäß einem der Ansprüche 1 oder 2, wobei die Turmkonsole (1) so ausgestaltet ist, dass sie mit dem Turbinenträger (17) gemeinsam drehbar ist.

4. Windturbinenanlage gemäß einem der Ansprüche 1 oder 2, wobei die Turmkonsole (1) so ausgelegt ist, dass sie bezüglich des Fundaments (15) nicht drehbar ist.

5. Windturbinenanlage gemäß einem der Ansprüche 1 bis 4, weiter umfassend mindestens ein Generatorkabel (3, 3', 3") je Windturbine (4, 4', 4"), welches derart ausgelegt ist, dass es mit dem Turbinenträger (17) gemeinsam drehbar ist.

6. Windturbinenanlage gemäß einem der Ansprüche 1 bis 5, wobei die Elektronik weiter
einen Yawantrieb (12), eine Windnachführung Yaw (11), eine Steuerleitung (8) und eine
Stromleitung (6) umfasst.

7. Windturbinenanlage gemäß einem der Ansprüche 1 bis 6, weiter umfassend einen Schleifring (14) zwischen der Elektronik (18) und der Netzleitung (13) zur Übertragung elektrischer Signale.

8. Windturbinenanlage gemäß einem der Ansprüche 1 bis 6, wobei die Netzleitung (13) im Wesentlichen flexibel ausgestaltet ist.

9. Windturbinenanlage gemäß einem der Ansprüche 1 bis 8, umfassend die Türe (9) für den Einstieg in die Windturbinenanlage und ein Fenster (19).

10. Windturbinenanlage gemäß einem der Ansprüche 1 bis 9, weiter umfassend einen Aufstieg bis zum Turbinenträger(17).

11. Windturbinenanlage gemäß einem der Ansprüche 1 bis 10, weiter umfassend eine Wartungsluke mit einem Deckel (20).

12. Windturbinenanlage gemäß Anspruch 4, oder einem der Ansprüche 5-11 in Kombination mit Anspruch 4, weiter umfassend mindestens eine Befestigung (10) der Turmkonsole (1) an einem Fundament, und wobei die Befestigung (10) in der montierten Windkraftanlage im Inneren der Windkraftanlage und von Außen unzugänglich ist.

## Claims

1. Wind turbine installation for power generation, comprising:
a) a turbine support (17) with at least two wind turbines (4, 4′, 4ʺ);
b) a tower console (1) with at least one bearing point (2) which permits a rotational movement of the turbine support (17) about a vertical axis of the turbine support (17) and relative to a foundation (15);
c) at least one tower pillar (5, 5') by means of which the turbine support (17) is connected to the tower console (1);
d) electronics (18) comprising an electronic controller, wherein the electronics (18) are configured to transfer electrical power into a power network line (13) in network-compatible form, wherein the electronics (18) in the tower console (1) of the wind turbine installation are designed so as to be rotatable about the vertical axis of the turbine support (17) relative to the foundation (15) and relative to a power network line (13), and wherein
the wind turbine installation has a door (9) for providing access into the wind turbine installation, wherein maintenance personnel can enter the interior of the tower console (1) through the door (9) and gain access to the electronics (18).

2. Wind turbine installation according to Claim 1, wherein the turbine support (17) is oriented substantially horizontally relative to the foundation (15) or ground.

3. Wind turbine installation according to either of Claims 1 and 2, wherein the tower console (1) is designed so as to be rotatable jointly with the turbine support (17).

4. Wind turbine installation according to either of Claims 1 and 2, wherein the tower console (1) is designed so as to be non-rotatable relative to the foundation (15).

5. Wind turbine installation according to one of Claims 1 to 4, furthermore comprising, per wind turbine (4, 4′, 4ʺ), at least one generator cable (3, 3′, 3ʺ) which is designed so as to be rotatable jointly with the turbine support (17).

6. Wind turbine installation according to one of Claims 1 to 5, wherein the electronics furthermore comprise a yaw drive (12), a wind yaw tracker (11), a control line (8) and an electrical line (6).

7. Wind turbine installation according to one of Claims 1 to 6, furthermore comprising a slip ring (14) between the electronics (18) and the power network line (13) for the transmission of electrical signals.

8. Wind turbine installation according to one of Claims 1 to 6, wherein the power network line (13) is substantially of flexible form.

9. Wind turbine installation according to one of Claims 1 to 8, comprising the door (9) for providing access into the wind turbine installation, and a window (19) .

10. Wind turbine installation according to one of Claims 1 to 9, furthermore comprising a climbing facility up to the turbine support (17).

11. Wind turbine installation according to one of Claims 1 to 10, furthermore comprising a maintenance hatch with a cover (20) .

12. Wind turbine installation according to Claim 4, or one of Claims 5-11 in combination with Claim 4, furthermore comprising at least one fastening (10) of the tower console (1) to a foundation, and wherein, in the installed wind power installation, the fastening (10) is in the interior of the wind power installation, and is not accessible from the outside.

## Revendications

1. Installation de turbines éoliennes pour la production d'électricité, comprenant :
a) un support de turbines (17) muni d'au moins deux turbines éoliennes (4, 4′, 4ʺ) ;
b) une console de tour (1) munie d'au moins un point de montage (2), qui permet un mouvement de rotation du support de turbines (17) autour d'un axe vertical du support de turbines (17) et par rapport à une fondation (15) ;
c) au moins un appui de tour (5, 5'), par lequel le support de turbines (17) est relié à la console de tour (1) ;
d) une électronique (18) comprenant une commande électronique, l'électronique (18) étant configurée pour transférer un courant électrique de manière conforme au réseau dans une ligne de réseau (13), dans laquelle l'électronique (18) dans la console de tour (1) de l'installation de turbines éoliennes est conçue de telle sorte qu'elle peut tourner par rapport à la fondation (15) et à une ligne de réseau (13) autour de l'axe vertical du support de turbines (17), et dans laquelle
l'installation de turbines éoliennes comprend une porte (9) pour l'entrée dans l'installation de turbines éoliennes, le personnel d'entretien pouvant pénétrer à l'intérieur de la console de tour (1) par la porte (9) et avoir accès à l'électronique (18).

2. Installation de turbines éoliennes selon la revendication 1, dans laquelle le support de turbines (17) est orienté essentiellement horizontalement par rapport à la fondation (15) ou au sol.

3. Installation de turbines éoliennes selon l'une quelconque des revendications 1 ou 2, dans laquelle la console de tour (1) est conçue de telle sorte qu'elle peut tourner conjointement avec le support de turbines (17) .

4. Installation de turbines éoliennes selon l'une quelconque des revendications 1 ou 2, dans laquelle la console de tour (1) est conçue de telle sorte qu'elle ne peut pas tourner par rapport à la fondation (15).

5. Installation de turbines éoliennes selon l'une quelconque des revendications 1 à 4, comprenant en outre au moins un câble de générateur (3, 3′, 3ʺ) par turbine éolienne (4, 4′, 4ʺ), qui est conçu de telle sorte qu'il peut tourner conjointement avec le support de turbines (17).

6. Installation de turbines éoliennes selon l'une quelconque des revendications 1 à 5, dans laquelle l'électronique comprend en outre un entraînement en lacet (12), un dispositif d'orientation au vent (11), une ligne de commande (8) et une ligne électrique (6).

7. Installation de turbines éoliennes selon l'une quelconque des revendications 1 à 6, comprenant en outre un collecteur tournant (14) entre l'électronique (18) et la ligne de réseau (13) pour le transfert de signaux électriques.

8. Installation de turbines éoliennes selon l'une quelconque des revendications 1 à 6, dans laquelle la ligne de réseau (13) est conçue essentiellement sous forme flexible.

9. Installation de turbines éoliennes selon l'une quelconque des revendications 1 à 8, comprenant la porte (9) pour l'entrée dans l'installation de turbines éoliennes et une fenêtre (19).

10. Installation de turbines éoliennes selon l'une quelconque des revendications 1 à 9, comprenant en outre une montée jusqu'au support de turbines (17).

11. Installation de turbines éoliennes selon l'une quelconque des revendications 1 à 10, comprenant en outre une trappe d'entretien munie d'un couvercle (20).

12. Installation de turbines éoliennes selon la revendication 4, ou l'une quelconque des revendications 5 à 11 en combinaison avec la revendication 4, comprenant en outre au moins une fixation (10) de la console de tour (1) à une fondation, et dans laquelle la fixation (10) est inaccessible dans l'installation d'éoliennes montée à l'intérieur de l'installation d'éoliennes et depuis l'extérieur.
